# EUROPÄISCHE PATENTSCHRIFT

(11) **EP 1 935 687 B1**
(45) Veröffentlichungstag und Bekanntmachung des Hinweises auf die Patenterteilung: **08.02.2012**
(21) Anmeldenummer: 07023717.7
(22) Anmeldetag: 07.12.2007
(51) Int. Cl.: B60J 1/18, B60J 5/10

(54) **Cabriolet-Fahrzeug mit einer seperat beweglichen Heckscheibe**
Cabriolet with a separately movable rear window pane
Cabriolet avec une lunette arrière mobile indépendamment

(30) Priorität: 21.12.2006 DE 102006061838
(43) Veröffentlichungstag der Anmeldung: 25.06.2008
(73) Patentinhaber: Wilhelm Karmann GmbH, 49084 Osnabrück (DE)
(72) Erfinder: Heselhaus, Udo, 49479 Ibbenbüren (DE); Bunsmann, Winfried, 49143 Bissendorf (DE); Weissmüller, Olaf, 49565 Bramsche (DE); Brockhoff, Franz-Ulrich, 49565 Bramsche (DE)
(74) Vertreter: Kronthaler, Schmidt & Coll.

(56) Entgegenhaltungen:
- EP-A- 1 902 882
- DE-A1- 10 060 402
- DE-A1- 10 215 902
- DE-A1- 10 345 123
- DE-A1- 10 345 276
- DE-A1-102004 049 674
- DE-A1-102005 021 117
- US-A- 2 564 446

## Beschreibung

Die Erfindung betrifft ein Cabriolet-Fahrzeug mit einem ablegbaren Dach und einer bei geschlossenem Dach separat beweglichen Heckscheibe nach dem Oberbegriff des Anspruchs 1 bzw. des Anspruchs 8.

Es sind Cabriolet-Fahrzeuge bekannt, bei denen eine Heckscheibe in eine unterhalb von dieser befindliche und der Karosserie zugeordnete Heckklappe absenkbar ist, wobei die Heckklappe mit im abgesenkten Zustand darin gehaltener Heckscheibe dann geöffnet werden kann, so daß sich eine große Ladeöffnung ergibt. Beim Ausfahren der Heckscheibe aus dieser Position in das ansonsten geschlossene Dach muß jedoch die Heckscheibe passend in eine dort befindliche Dichtung eingeschoben werden. Dies ist insofern problematisch, als das Dach gegenüber der Karosserie Toleranzen aufweisen kann und insbesondere bei Ausbildung als sog. Softtop auch, insbesondere bei stark schwankenden Außentemperaturen, nicht unbedingt bei jedem Schließen in einen exakt gleich liegenden Strakverlauf gelangt. Zudem ist ein Einfahren in die Heckklappe nur dann möglich, wenn diese großflächig und mindestens so hoch und breit wie die Heckscheibe selbst ist. Ein Aufnahmespalt in der Heckklappe muß dann in Anpassung an die aufzunehmende Scheibe ungefähr planeben sein, um das Einfahren zu ermöglichen. Die Gestaltungsmöglichkeiten sowohl der Heckklappe als auch der Heckscheibe sind dadurch eingeschränkt.

Die DE 10 060 402 A1 zeigt eine Anbindung einer schwenkbeweglichen Heckscheibe an einen starren hinteren Dachteil eines sog. RHT (Retractable Hardtop). Diese Anbindung erfolgt im Falle der schwenkbaren Scheibe über eine obere Querachse 7. Auch kann gemäß dieser Schrift die Heckscheibe selbst in einer Heckklappe gehalten sein, die dann aber ihrerseits wiederum nur über eine obere Schwenkachse an das Dach aus festen Dachteilen angebunden wäre.

In allen diesen Fällen wäre daher gemäß dieser Schrift die Heckscheibe bei Ablage des Daches nicht vollständig fest an dieses angebunden, sondern lediglich über die Schwenkverbindung der oberen Kante. Eine solche Verbindung würde jedoch bei einem Softtop nicht zu einem definierten und immer gleichartigen Einfalten des Daches führen können.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein Cabriolet-Fahrzeug mit den Merkmalen des Anspruchs 8. Vorteilhafte Ausgestaltungen und Weiterbildungen der Erfindung sind in den weiteren Ansprüchen 2 bis 7 und 9 bis 12 angegeben.

Durch die Erfindung ist es auch bei einem Fahrzeug mit einem flexiblen Dachbezug, einem sog. Softtop, ermöglicht, die Heckscheibe separat zu öffnen trotz einer Zuordnung der Heckscheibe zum beweglichen und vollständig in der Karosserie ablegbaren Dach. Die Heckscheibe kann in jedem Bewegungszustand in ihrer Zuordnung zum Dach verbleiben, eine Übergabe an Karosserieteile ist nicht erforderlich. Die Erfindung ist damit unempfindlich gegenüber Toleranzen im Dach. Dennoch ist das Dach mit seiner Heckscheibe vollständig in der Karosserie ablegbar, es müssen dann keine störenden Rahmenteile oberhalb der Fensterbrüstungslinie verbleiben oder separat entfernt werden. Die der Heckscheibe zugewandten Randbereiche des Daches sind in herkömmlicher Weise mit ablegbar. Dadurch, daß die Heckscheibe an einem nach unten offenen und mit diesem zur Dachöffnung absenkbaren Rahmenteil des Daches gehalten ist, können Schwenkscharniere für die Heckscheibe an dem oberen Schenkel dieses Rahmenteils angeordnet sein.

Insbesondere kann ein solcher Rahmenteil im wesentlichen U-förmig ausgebildet sein und die Heckscheibe zumindest an ihrem oberen Rand sowie seitlich umgreifen, wodurch diese sicher eingefaßt ist. An den Seitenschenkeln können dann zusätzliche Gasdruckfedern oder ähnliche das Aufschwenken unterstützende Baueinheiten angeordnet sein.

Die Heckscheibe kann selbst rahmenlos aufschwenken oder in einem mit dieser mitbeweglichen Schwenkrahmen gehalten sein. Im letztgenannten Fall kann bei geschlossenem Dach und geschlossener Heckscheibe der untere Abschluß des Schwenkrahmens von dem oberen Rand einer geschlossenen Heckklappe dichtend hintergreifbar sein. Dieser Schwenkrahmen ist dann bei geschlossener Heckklappe nicht aufschwenkbar. Wohl aber kann auch bei einer solchen Konstruktion die Heckscheibe, die von außen auf eine Dichtung des Schwenkrahmens aufpreßbar ist und die mit ihrer unteren Kante etwas oberhalb des unteren Randes des Schwenkrahmens enden kann, auch in dieser Schließstellung der Heckklappe separat gegenüber dem Schwenkrahmen aufschwenkbar sein. Damit ist eine besonders flexible Handhabung ermöglicht.

Die Heckklappe kann zur Freigabe einer Ladeöffnung für Gepäck nach oben aufschwenkbar sein und in dieser Stellung die Heckscheibe in ihrer aufgeschwenkten Stellung unterhalb der Heckklappe und teilweise von diesem überdeckt gehalten sein. Damit ist in einer solchen Stellung eine besonders große Ladeöffnung etwa von der Stoßstange bis zur Scharnierachse der aufgeschwenkten Heckscheibe erreicht. Zudem dienen die Heckscheibe und Heckklappe gemeinsam als Überdachung wie bei einer einteiligen und oben angelenkten Heckklappe nach Art eines Regenschutzes.

Trotzdem kann die Anlenkung der Heckklappe unterhalb einer seitliche Scheiben untergreifenden und im wesentlichen der Fahrzeuglängsrichtung folgenden Fensterbrüstungslinie gelegen sein. Diese Linie als Oberkante der Karosserie bleibt daher die vollständige Trennungslinie zwischen Dach und Karosserie.

Die Beweglichkeit der Heckscheibe gegenüber dem umgebenden Dachbereich kann am Dach vor dessen Montage am Rohbau der Karosserie getestet und justiert werden. Die Dacheinheit kann daher vollständig voreingestellt und modular an die Montage angeliefert werden. Eine gegenüber einem herkömmlichen Dach zusätzliche Abstimmung gegenüber der Karosserie ist völlig entbehrlich.

Insbesondere kann das Fahrzeug als Steilheckfahrzeug ausgebildet sein und die Heckklappe einen im wesentlichen aufrechten und den Aufnahmeraum nach hinten abschließenden Heckblendenteil umfassen, so daß ein erfindungsgemäßes Fahrzeug auch als Klein- oder Kompaktwagen ausgebildet sein kann.

Das Dach kann ein sog. Softtop mit einem außerhalb der Heckscheibe einheitlichen, durchgehenden Bezug ausbilden, bei dem die Bezugbereiche zur Dachablage einfaltbar sind.

Insbesondere ist dadurch, daß die Heckscheibe zur Dachöffnung fest mit den sie umgebenden Dachbereichen verbindbar ist, erreicht, daß das Dach genau wie mit in einer Ausführung ohne separate Beweglichkeit der Heckscheibe ablegbar ist. Die gesamte Dachkinematik kann dann von einem herkömmlichen Dach übernommen werden.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische perspektivische Ansicht eines Cabriolet-Fahrzeugs von schräg hinten, wobei das Fahrzeug zwar ein Retractable Hardtop (RHT) als bewegliches Dach zeigt, das jedoch bezüglich der separat beweglichen Heckscheibe und ihrer Anbin- dung an Rahmenteile erfindungsgemäß ausgebildet ist, wobei die Darstellung nach vorne abgebrochen ist und das Fahrzeug bei geschlossenem Dach, ge- schlossener Heckscheibe und geschlossener Heck- klappe zeigt,
- Fig. 2: das Fahrzeug nach Fig. 1 bei separat geöffneter Heckscheibe,
- Fig. 3: eine ähnliche Ansicht wie Fig. 1, jedoch bei ge- schlossener Heckscheibe und geöffneter Heckklappe,
- Fig. 4: eine ähnliche Ansicht wie Fig. 3, jedoch bei ge- öffneter Heckscheibe und geöffneter Heckklappe so- wie geöffnetem Schwenkrahmen,
- Fig. 5: eine Schnittansicht des oberen Randes der Heck- scheibe und des sie untergreifenden Schwenkrahmens oben in Stellung nach Fig. 4, darunter in Stellung nach Fig. 2 und unten in Schließstellung nach Fig. 1,
- Fig. 6: eine Seitenansicht eines Cabriolet-Fahrzeugs mit einem Softtop-Dach mit sowohl aufgeschwenkter Heckscheibe als auch Heckklappe,
- Fig. 7: eine Seitenansicht eines erfindungsgemäßen Cabrio- let-Fahrzeugs mit einem Softtop, das in Öffnungs- stellung bezüglich der Fahrtrichtung vor der Heck- klappe ablegbar ist,
- Fig. 8: eine ähnliche Darstellung wie Fig. 1 eines alter- nativen Fahrzeugs mit unten angeschlagener Heck- klappe,
- Fig. 9: das Fahrzeug nach Fig. 8 bei geöffneter Heckklap- pe, geschlossenem Dach und geschlossener Heck- scheibe,
- Fig. 10: eine ähnliche Ansicht wie Fig. 9 mit zusätzlich nach oben aufgeschwenkter Heckscheibe,
- Fig. 11: das Fahrzeug nach Fig. 10 in Darstellung ohne den Dachbezug während der Dachöffnung mit dabei im Dach fest gehaltener Heckscheibe,
- Fig. 12: das Fahrzeug nach Fig. 11 während der weiter fort- schreitenden Dachöffnung,
- Fig. 13: das Fahrzeug nach Fig. 12 bei vollständig abgeleg- tem Dach,
- Fig. 14: eine schematische Seitenansicht von Heckscheibe und Heckklappe bei ihrer Öffnung sowie bei Halte- rung der Heckscheibe im zu öffnenden Dach.

Das erfindungsgemäße Cabriolet-Fahrzeug 1 kann, wie im gezeichneten Ausführungsbeispiel angedeutet, entweder ein mit zumindest einer Rückbank versehenes vier- oder mehrsitziges Fahrzeug oder auch ein Zweisitzer sein. Die Steilheckausbildung ist sowohl im Klein- und Kompaktwagenbereich als auch etwa bei Geländewagen, Kombis oder Vans häufig anzutreffen.

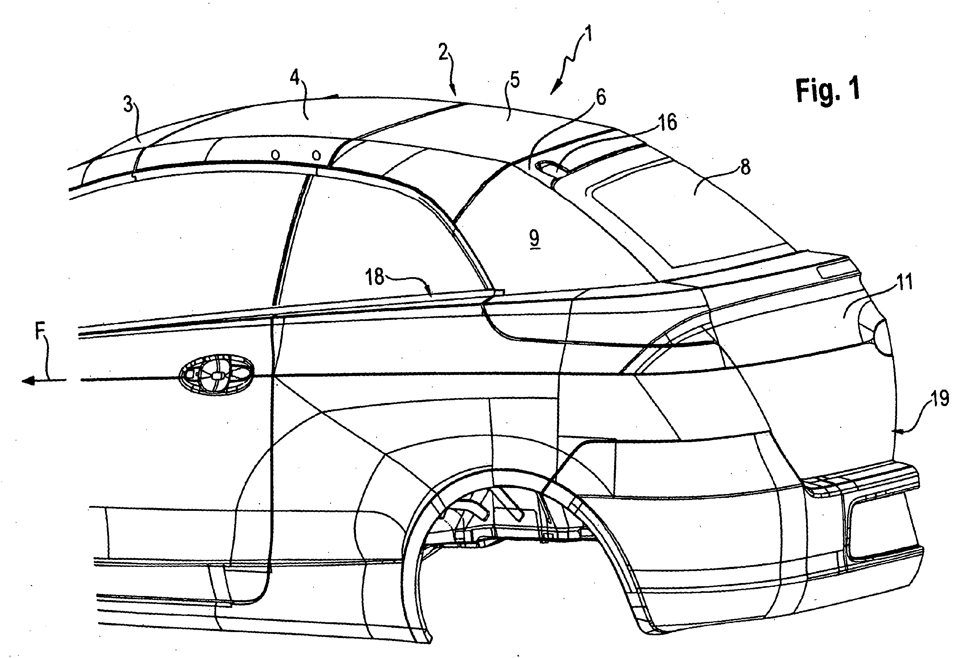

Ein hier insgesamt bewegliche und in geschlossener Stellung mittelbar oder unmittelbar an einen Windschutzscheibenrahmen 3 anschließendes Dach 2 umfaßt in der Darstellung nach den Figuren 1 bis 5 mehrere an ihrer Außenfläche voneinander getrennte und mehr oder minder plattenförmig ausgebildete Baueinheiten 4, 5, 6.

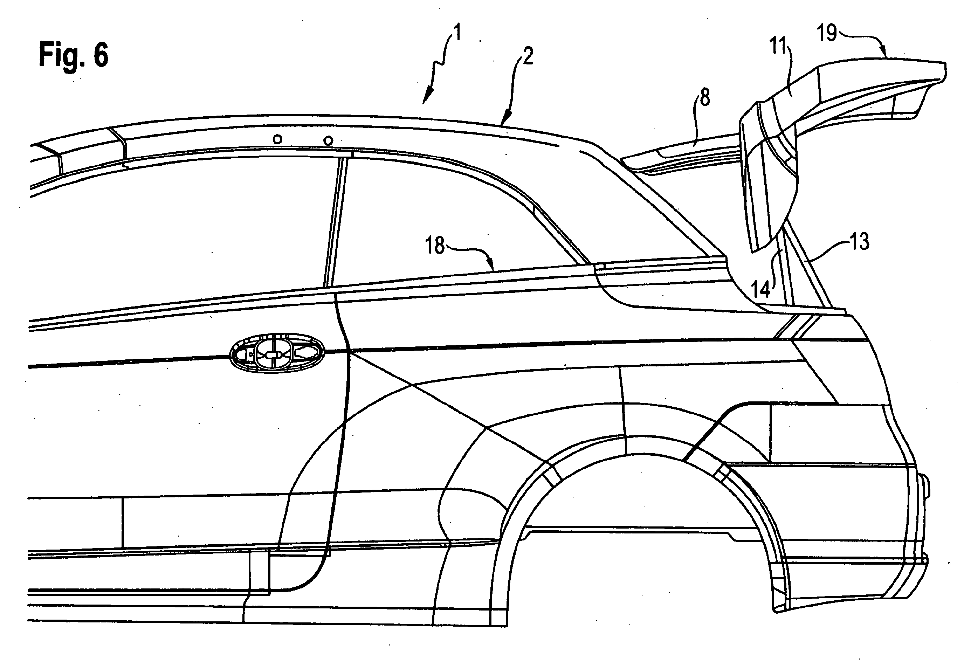

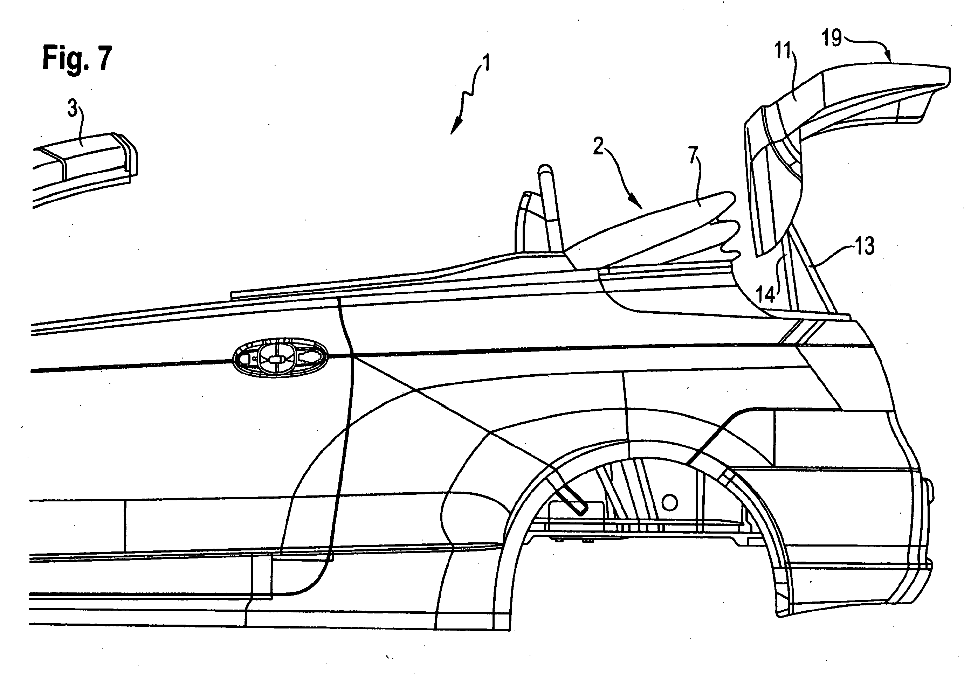

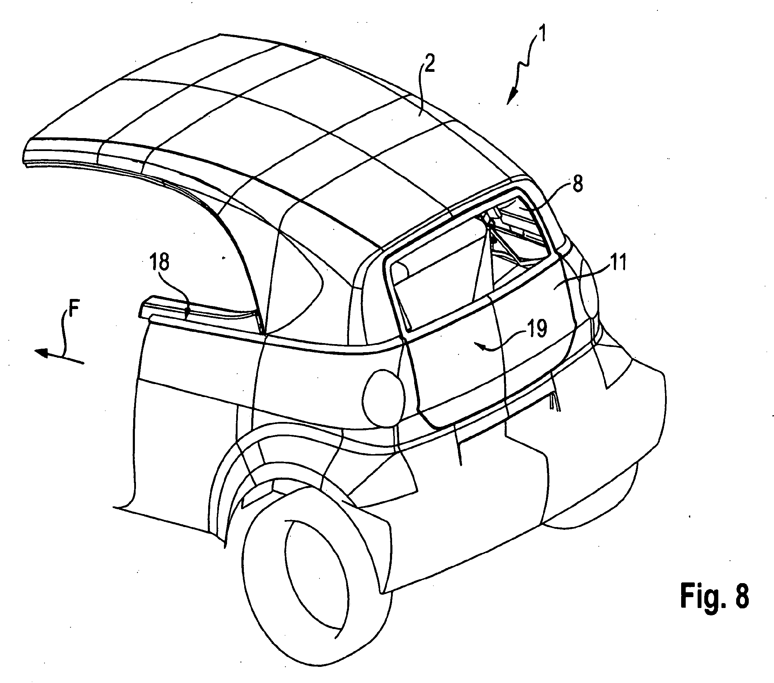

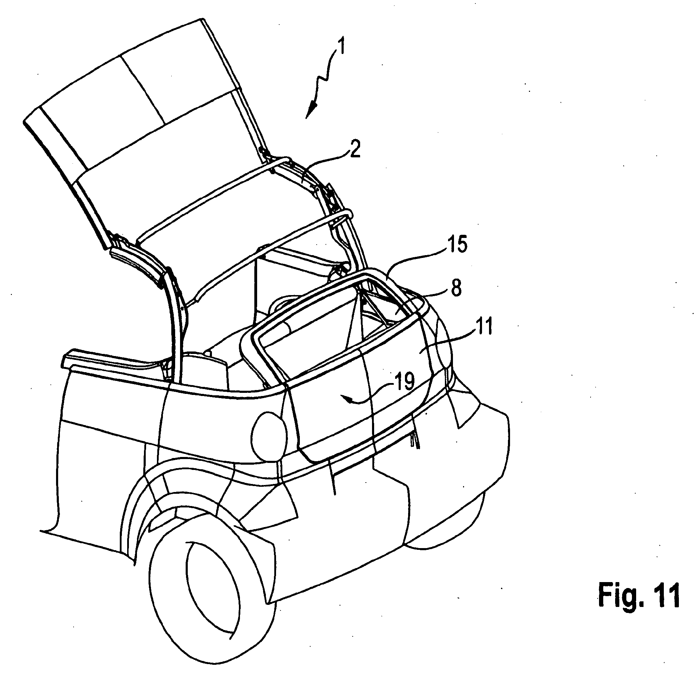

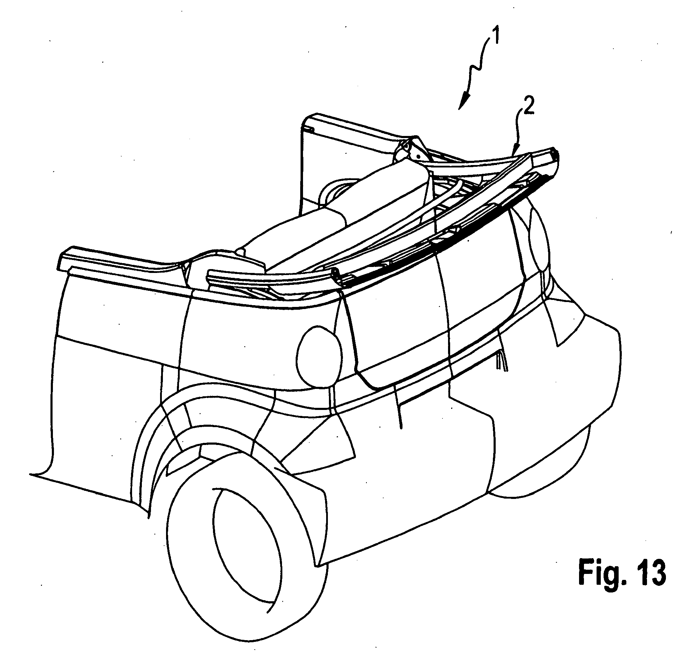

In der erfindungsgemäßen Ausbildung nach den Figuren 6 und 7 sowie nach den Figuren 8 bis 14 ist das Dach 2 nach Art eines Soft-Tops mit einem gemeinsamen Bezug 7 überzogen.

In jedem Fall ist von dem insgesamt absenkbaren Dach 2 eine Heckscheibe 8 umfaßt, die bei ansonsten geschlossenem Dach 2 separat nach oben aufschwenkbar ist und hierbei von den sie umgebenden hinteren Randsäulen 9, die mit absenkbar sind, abhebt.

Zudem ist in jedem Fall das Dach 2 bei seiner Öffnung heckwärts und abwärts verlagerbar. Zur Aufnahme des geöffneten Daches kann ein Aufnahmeraum 10 vorgesehen sein, der zumindest teilweise von einer Heckklappe 11 abdeckbar sein kann, die dann in Doppelfunktion zur zumindest teilweisen Abdekkung des Aufnahmeraums 10 für das Dach 2 und eines Gepäckraums 12 wirkt, der bei geschlossenem Dach 2 den Aufnahmeraum 10 mit umfassen kann.

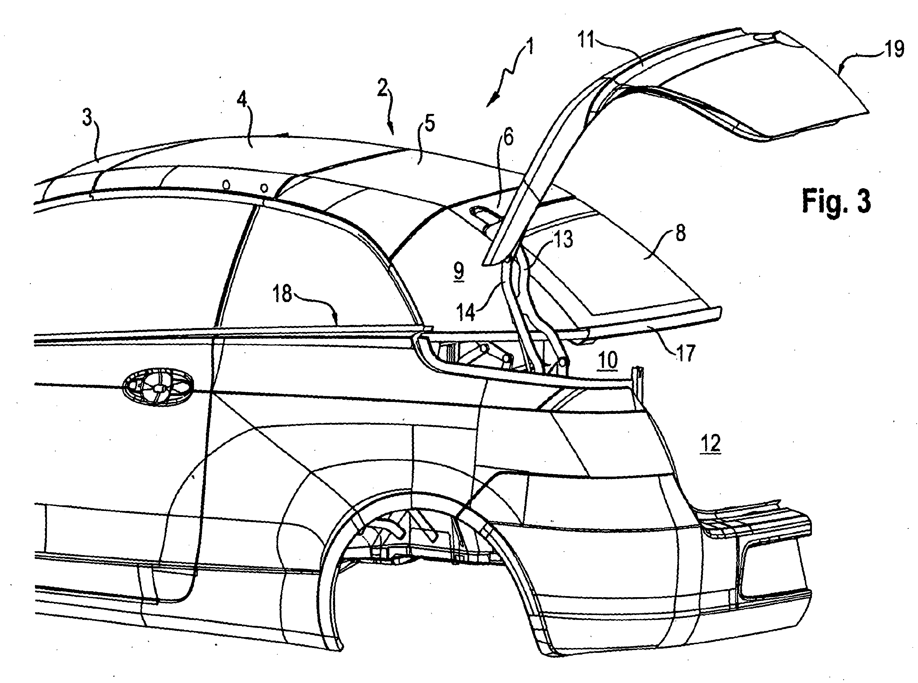

In der Darstellung nach den Figuren 1 bis 5, das zwar ein RHT zeigt, jedoch bezüglich der Heckscheibe und ihrer Anbindung sowie bezüglich der Heckklappe erfindungsgemäß ausgebildet ist, ist die Heckklappe 11 sowohl zur Freigabe einer Durchtrittsöffnung für das Dach 2 in den oder aus dem Aufnahmeraum 10 als auch zur Freigabe einer Ladeöffnung für Gepäck im gleichen Bewegungssinn aufbeweglich, nämlich derart, daß zu jeder dieser Öffnungsarten ihr hinterer Rand nach oben und vorne angehoben wird. Dies kann im einfachsten Fall über eine Schwenkbewegung mit einem Freiheitsgrad um eine fahrzeugfeste Querachse möglich sein. Hier ist ein Viergelenk mit Lenkern 13, 14 vorgesehen, so daß die Heckklappe 11 mit ihrem bei geschlossenem Dach 2 vorderen Rand in Öffnungsstellung aufwärts und auch heckwärts verlagert werden kann (Fig. 3).

Die Heckscheibe 8 ist an einem nach unten offenen und mit diesem zur Dachöffnung absenkbaren Rahmenteil 15 des Daches 2 gehalten, wobei der ein- oder mehrstückige Rahmenteil 15 fest mit den seitlich der Heckscheibe 8 gelegenen Abschnitten 9 des Daches verbunden und mit diesen bei Dachöffnung in die Karosserie ablegbar ist.

Der Rahmenteil 15 umgreift im geschlossenen Zustand die Heckscheibe 8 zumindest an ihrem oberen Rand sowie seitlich und kann daher im wesentlichen U-förmig und nach unten offen ausgebildet sein.

Gegenüber diesem Rahmenteil 15 kann die Heckscheibe 8 als rahmenlose Baueinheit aufschwenkbar sein, zum Beispiel mittels gegenüber dem Rahmenteil 15 wirksamen Gasdruckfedern.

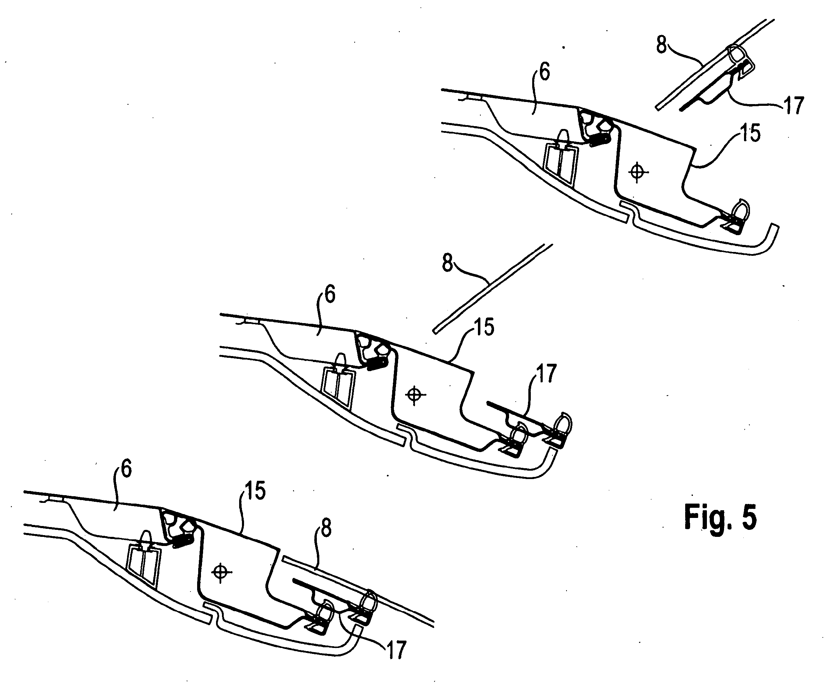

Die Schwenkscharniere 16 können dann direkt an der Heckscheibe 8 angreifen. Alternativ kann die Heckscheibe 8 auch in einem mit dieser mitbeweglichen Schwenkrahmen 17 gehalten ist, wie dies in Fig. 5 dargestellt ist. Hierbei sind vorteilhaft zwei unterschiedliche Öffnungsarten der Heckscheibe 8 möglich: Diese kann mit dem Schwenkrahmen 17 aufgeschwenkt werden (Fig. 5 oben) oder bei fest liegendem Schwenkrahmen 17 einzeln aufgeschwenkt werden (Fig. 5 Mitte).

Damit ist es ermöglicht, daß die Heckklappe 11 in ihrer geschlossenen Stellung und geschlossener Stellung des Daches 2 den unteren Rand des Schwenkrahmens 17 dichtend übergreifen kann, so daß aus dieser geschlossenen Stellung der Heckklappe 11 die Heckscheibe 8 ohne weiteres nicht separat geöffnet werden könnte.

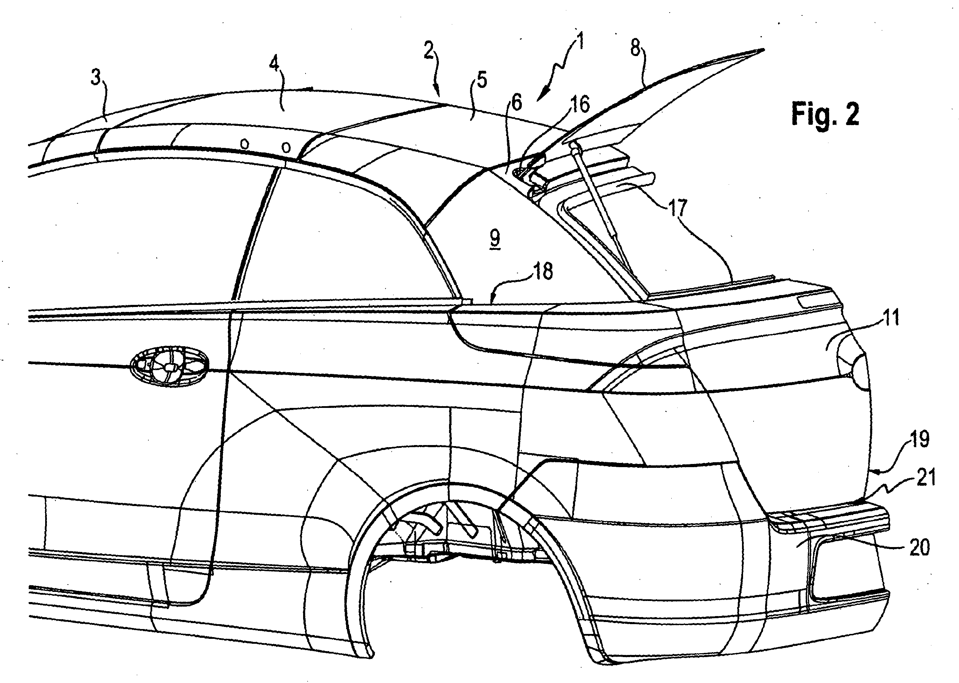

Mit der angesprochenen einzelnen Aufschwenkbarkeit der Heckscheibe 8 gegenüber dem Schwenkrahmen 17, wie in der Mitte von Fig. 5 dargestellt ist, kann in dieser gegenüber dem unteren Rand des Schwenkrahmens 17 dichtenden und haltenden Schließstellung der Heckklappe 11 dennoch die Heckscheibe 8 gegenüber dem Schwenkrahmen 17 aufschwenkbar sein. Die Heckscheibe 8 endet mit ihrer unteren Kante etwas oberhalb des unteren Randes des Schwenkrahmens 17. Dann kann auch bei geschlossenem Dach 2 und geschlossener Heckklappe 11 die Heckscheibe 8, die von oben unter Pressung dichtend auf dem Schwenkrahmen 17 aufliegt, gegenüber diesem aufgeschwenkt werden (Fig. 5 Mitte, Fig. 2).

Bei geschlossenem Dach 2 und geschlossener Heckklappe 11 ist durch das Aufschwenken der Heckscheibe 8 ein schneller Zugang zum Gepäckraum ohne großen Kraftaufwand ermöglicht.

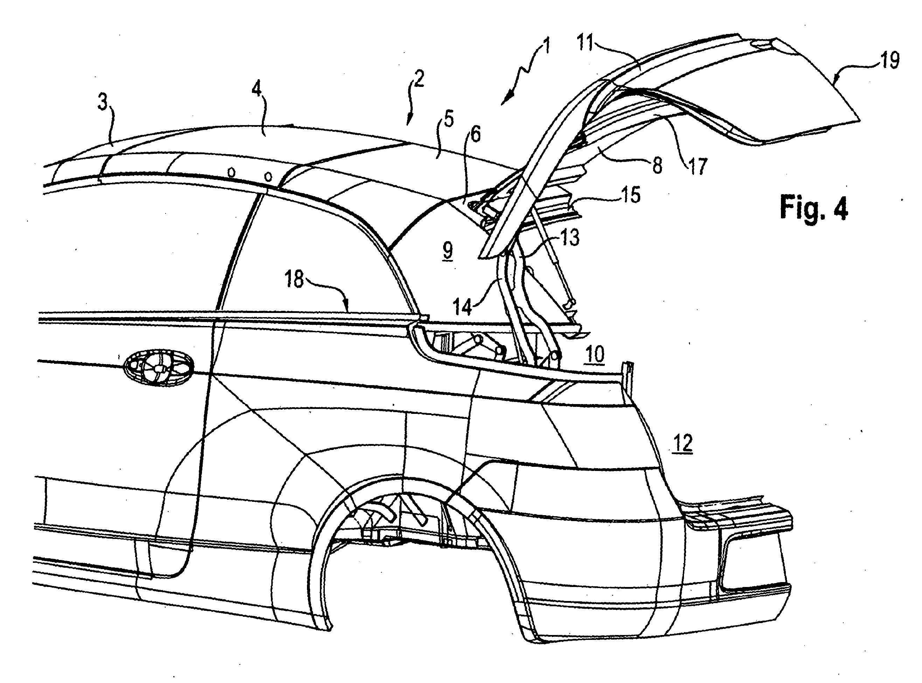

Mit zusätzlichem Aufschwenken auch der Heckklappe (Fig. 4, Fig. 6) ergibt sich hingegen eine besonders große Ladeöffnung, die etwa von der Stoßstange 20 bis zur oberen Dachfläche reicht. Dennoch ist hierzu keine von oben bis unten durchgehende Heckklappe nötig, sondern diese erstreckt sich in geschlossener Stellung erst ungefähr ab der horizontalen Ebene der Fensterbrüstung 18 nach unten. In dieser aufgeschwenkten Stellung von Heckscheibe 8 und Heckklappe 11 ist die Heckscheibe 8 in ihrer aufgeschwenkten Stellung unterhalb des Deckelteils 11 und teilweise von diesem überdeckt halterbar. Auch in dieser Stellung einer maximierten Ladeöffnung ist daher die Verletzungsgefahr für den Kopf minimal. Zudem bildet die doppelte Abdeckung der Ladeöffnung aus Deckelteil 11 und Heckscheibe 8 einen Wetterschutz während des Be- oder Entladens.

Bei Öffnung des gesamten Daches 2 zur Cabriolet-Öffnung kann die Heckscheibe 8 hingegen nach Art einer herkömmlichen Heckscheibe fest mit den Rahmenteilen 15 - und damit mit den seitlich einfassenden Dachbereichen 9 - verbunden bleiben, so daß die herkömmliche Ablagebewegung des Daches mit seiner vollständigen Absenkung in die Karosserie möglich bleibt. Auch der erforderliche Stauraum für das abgelegte Dach ist nicht vergrößert.

Wie insbesondere im Ausführungsbeispiel nach den Figuren 8 bis 14 deutlich wird, kann die Heckklappe 11 auch unten angeschlagen sein. Die aufgeklappte Heckklappe liegt dann auf Höhe einer unteren Ladekante 21, die vorteilhaft etwa auf Höhe der oberen Kante der hinteren Stoßstange 20 und eines Kofferraumsbodens liegt. Auch ein seitliches Anschlagen ist alternativ möglich. Hierfür kann die Heckklappe 11 beispielsweise auch zweiflüglig ausgebildet sein.

In jedem Fall kann das erfindungsgemäße Cabriolet-Fahrzeug 1 als Steilheckfahrzeug ausgebildet sein. Die Heckklappe 11 besteht dann im wesentlichen aus einem aufrechten und den Aufnahmeraum 10 nach hinten abschließenden Heckblendenteil 19, der jedoch auch wie im ersten Ausführungsbeispiel über seitlich nach vorne ragende Flügelteile im Bereich der Fensterbrüstungslinie 18 gehalten sein kann.

In den Ausführungsbeispielen, bei denen auch das Dach entsprechend der Erfindung ausgebildet ist, nämlich denen nach Fig. 7 sowie nach Fig. 8 bis Fig. 14, bildet das Dach 2 ein sog. Softtop mit einem außerhalb der Heckscheibe 8 einheitlichen, durchgehenden Bezug 7 aus.

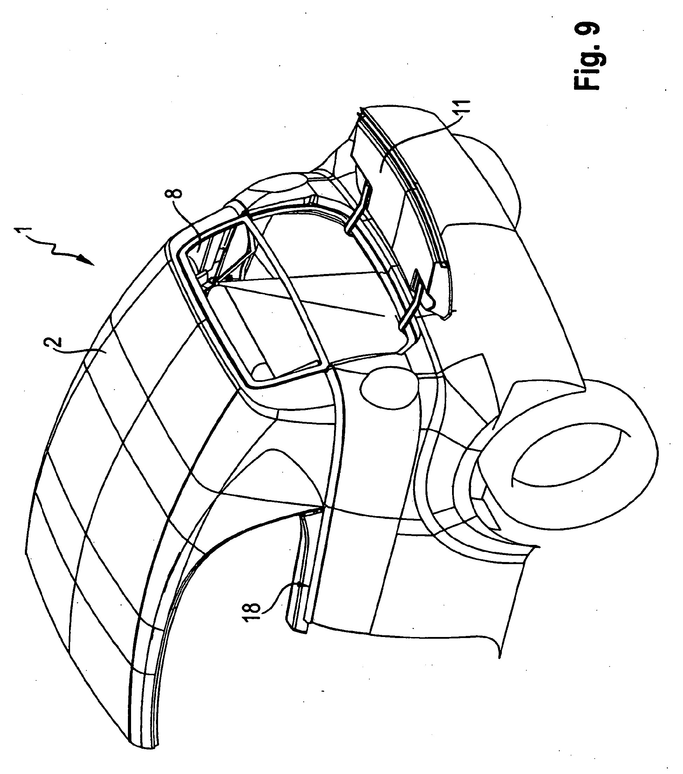

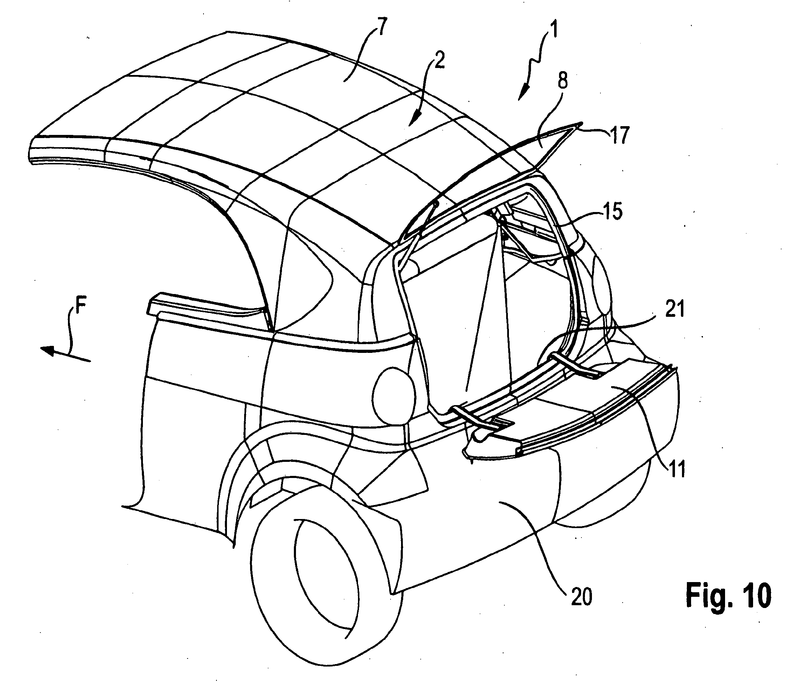

Die Bewegungsmöglichkeiten von Heckscheibe 8 und Heckklappe 11 sind prinzipiell ähnlich wie bei dem oben näher erläuterten RHT: Auch hier kann die Heckscheibe 8 sowohl bei geschlossener als auch bei geöffneter Heckklappe 11 aufschwenken, so daß sich dann wieder eine in ihrer Höhe maximierte Beladeöffnung bis zur unteren Ladekante 21 im Bereich der Stoßstange 20 ergibt (Fig. 10). Alternativ kann auch nur die Heckklappe 11 bei geschlossener Heckscheibe 8 aufbeweglich sein (Fig. 9).

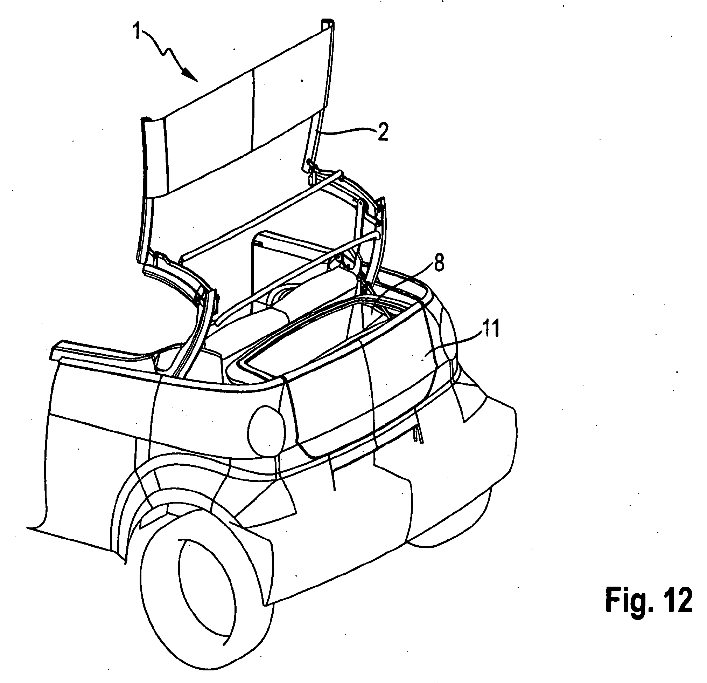

Zur Dachöffnung im Cabriolet-Sinn bleibt jedoch die Heckscheibe 8 in den Bezug 7 integriert (Fig. 12) und fest mit den umgebenden Dachbereichen 9 verbunden, so daß das gesamte Dach 2 in herkömmlicher Faltung eines Softtops in die Karosserie abgelegt werden kann.

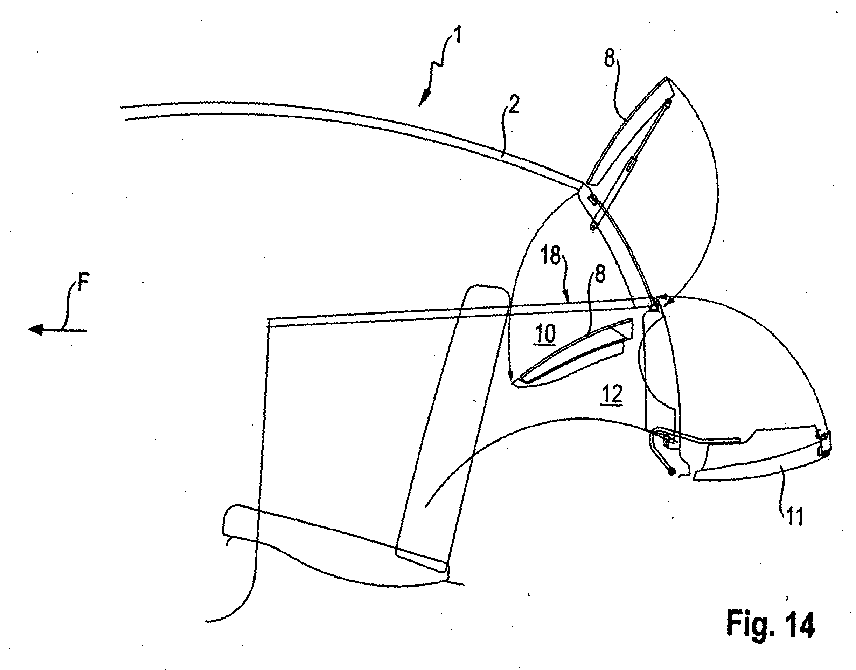

Auch in Fig. 14 sind in schematischer Seitenansicht von Heckscheibe 8 und Heckklappe 11 einerseits die Scheibenöffnung nach oben bei geschlossenem Dach 2 sowie die Scheibenöffnung während ihrer Einbettung in das Dach 2 bei dessen Öffnung im Cabriolet-Sinn dargestellt. Zudem ist das Aufschwenken der Heckklappe 11 nach unten angedeutet. Die Scharniere liegen dabei wieder im Bereich der Ladekante 21, die heckwärts an den Kofferraumboden bündig oder mit einer kleinen Stufe anschließt.

## Patentansprüche

1. Cabriolet-Fahrzeug (1) mit einem in seiner Offenstellung in der Karosserie ablegbaren Dach (2), wobei das Dach eine Heckscheibe (8) umfaßt, die gegenüber sie umfassenden und bei Dachöffnung in die Karosserie absenkbaren Randbereichen (9) des Daches (2) in dessen geschlossener Stellung öffnungsfähig ist,
**dadurch gekennzeichnet,**
**daß** das Dach (2) durch ein sogenanntes Softtop mit einem außerhalb der Heckscheibe (8) einheitlichen, durchgehenden Bezug (7) ausgebildet ist, an dem die Heckscheibe (8) an einem nach unten offenen und mit diesem zur Dachöffnung absenkbaren Rahmenteil (15) des Daches (2) gehalten ist, wobei der Rahmenteil (15) die Heckscheibe (8) zumindest an ihrem oberen Rand sowie seitlich umgreift und wobei die Heckscheibe (8) bei geschlossenem Dach (2) gegenüber den sie umfassenden Randbereichen (9) des Daches (2) nach oben aufschwenkbar ist.

2. Cabriolet-Fahrzeug (1) nach Anspruch 1,
**dadurch gekennzeichnet,**
**daß** die Heckscheibe (8) in einem mit dieser mitbeweglichen Schwenkrahmen (17) gehalten ist.

3. Cabriolet-Fahrzeug (1) nach Anspruch 2,
**dadurch gekennzeichnet,**
**daß** bei geschlossenem Dach (2) und geschlossener Heckscheibe (8) der untere Abschluß des Schwenkrahmens (17) von dem oberen Rand einer geschlossenen Heckklappe (11) dichtend hintergreifbar ist.

4. Cabriolet-Fahrzeug (1) nach Anspruch 3,
**dadurch gekennzeichnet,**
**daß** in Schließstellung der Heckklappe (11) die Heckscheibe (8) gegenüber dem Schwenkrahmen (17) aufschwenkbar ist.

5. Cabriolet-Fahrzeug (1) nach einem der Ansprüche 1 bis 4,
**dadurch gekennzeichnet,**
**daß** die Heckklappe (11) zur Freigabe einer Ladeöffnung für Gepäck nach oben aufschwenkbar ist und in dieser Stellung die Heckscheibe (8) in ihrer aufgeschwenkten Stellung unterhalb der Heckklappe (11) und teilweise von dieser überdeckt halterbar ist.

6. Cabriolet-Fahrzeug (1) nach Anspruch 5,
**dadurch gekennzeichnet,**
**daß** die Anlenkung der Heckklappe (11) unterhalb einer seitliche Scheiben untergreifenden und im wesentlichen der Fahrzeuglängsrichtung folgenden Fensterbrüstungslinie (18) gelegen ist.

7. Cabriolet-Fahrzeug (1) nach einem der Ansprüche 1 bis 6,
**dadurch gekennzeichnet,**
**daß** das Fahrzeug als Steilheckfahrzeug ausgebildet ist und die Heckklappe (11) einen im wesentlichen aufrechten und den Aufnahmeraum nach hinten abschließenden Heckblendenteil umfaßt.

8. Cabriolet-Fahrzeug (1) mit einem in seiner Offenstellung in der Karosserie ablegbaren Dach (2), wobei das Dach eine Heckscheibe (8) umfaßt, die gegenüber sie umfassenden und bei Dachöffnung in die Karosserie absenkbaren Randbereichen (9) des Daches (2) in dessen geschlossener Stellung öffnungsfähig ist, und wobei das Fahrzeug (1) eine aufbewegliche Heckklappe (11) umfaßt, insbesondere nach einem der Ansprüche 1 bis 7,
**dadurch gekennzeichnet,**
**daß** das Dach (2) durch ein sogenanntes Softtop mit einem außerhalb der Heckscheibe (8) einheitlichen, durchgehenden Bezug (7) ausgebildet ist, an dem die Heckscheibe (8) an einem nach unten offenen und mit diesem zur Dachöffnung absenkbaren Rahmenteil (15) des Daches (2) gehalten ist, wobei der Rahmenteil (15) die Heckscheibe (8) zumindest an ihrem oberen Rand sowie seitlich umgreift und wobei einerseits die Heckscheibe (8) gegenüber den sie umfassenden Randbereichen (9) des Daches (2) in deren Schließstellung derart aufbeweglich ist, daß sich ein nach unten offener Durchladebereich zwischen den Randbereichen (9) ergibt und dieser durch Aufbewegung der Heckklappe (11) nach unten hin bis zu einer im Bereich eines Kofferraumbodens befindlichen Ladekante (21) vergrößerbar ist, und andererseits die Heckscheibe (8) zur Dachöffnung fest mit den sie umfassenden Randbereichen (9) verbindbar und mit diesen in die Karosserie absenkbar ist.

9. Cabriolet-Fahrzeug (1) nach Anspruch 8,
**dadurch gekennzeichnet,**
**daß** die Ladekante (21) auf Höhe der Oberkante einer hinteren Stoßstange (20) gelegen ist.

10. Cabriolet-Fahrzeug (1) nach einem der Ansprüche 8 oder 9,
**dadurch gekennzeichnet,**
**daß** die Heckklappe (11) in Schließstellung mit ihrer oberen Kante unmittelbar an die Heckscheibe (8) in deren Schließstellung angrenzt und zur Öffnung nach unten abklappbar ist.

11. Cabriolet-Fahrzeugdach mit einer im Dach (2) eingefaßten und gegenüber diesem beweglichen Heckscheibe (8) für ein Cabriolet-Fahrzeug (1) nach einem der Ansprüche 1 bis 10.

12. Cabriolet-Fahrzeugdach nach Anspruch 11,
**dadurch gekennzeichnet,**
**daß** die Heckscheibe bei geschlossenem Dach gegenüberseitlich umgebenden Randbereichen (9) aufschwenkbar und zur Dachöffnung fest an diesen Randbereichen (9) gehalten und mit diesen in der Karosserie ablegbar ist.

## Claims

1. A convertible vehicle (1) with a roof (2) which, in its open position, can be stowed in the vehicle body and comprises a rear window (8) which can be opened with respect to peripheral areas (9) of the roof (2) when the roof (2) is in its closed position, said peripheral areas (9) enclosing said rear window (8) and being lowerable into the vehicle body when the roof is open,
**characterised in that** the roof (2) is formed by a so called soft top with a cover (7) that is uniform and continuous outside the rear window (8) and in which the rear window (8) is held by a frame part (15) of the roof (2), said frame part (15) being open at the bottom and being lowerable together with the rear window (8) to open the roof and said frame part (15) encompassing at least the upper edge and the sides of the rear window (8), which rear window (8) can be swung open with respect to the surrounding peripheral areas (9) of the roof (2) when the roof (2) is closed.

2. The convertible vehicle (1) according to claim 1, **characterised in that** the rear window (8) is held in a pivoting frame (17) which can be moved together with the rear window (8).

3. The convertible vehicle (1) according to claim 2, **characterised in that**, when both the roof (2) and the rear window (8) are closed, the upper edge of a closed tailgate (11) can engage behind the lower end of the pivoting frame (17) in a sealing manner.

4. The convertible vehicle (1) according to claim 3, **characterised in that** the rear window (8) can be swung open with respect to the pivoting frame (17) when the tailgate (11) is closed.

5. The convertible vehicle (1) according to any one of claims 1 to 4, **characterised in that** the tailgate (11) can be swung open upwards to expose a loading opening for luggage and that, in this position, the rear window (8) can be held in its open position beneath the tailgate (11) and partially covered by the latter.

6. The convertible vehicle (1) according to claim 5, **characterised in that** the articulation of the tailgate (11) is located below a window sill line (18) which engages below lateral windows and which substantially follows the longitudinal direction of the vehicle.

7. The convertible vehicle (1) according to any one of claims 1 to 6, **characterised in that** it is provided as a hatchback vehicle and the tailgate (11) comprises a substantially upright rear panel forming the rear end of the stowage compartment.

8. A convertible vehicle (1) with a roof (2) which, in its open position, can be stowed in the vehicle body and comprises a rear window (8) which can be opened with respect to peripheral areas (9) of the roof (2) when the roof (2) is in its closed position, said peripheral areas (9) enclosing said rear window (8) and being lowerable into the vehicle body when the roof is open, and said vehicle (1) comprising an openable tailgate (11), in particular according to any one of claims 1 to 7, **characterised in that** the roof (2) is formed by a so called soft top which comprises a cover (7) that is uniform and continuous except for the rear window (8) and in which the rear window (8) is held by a frame part (15) of the roof (2), said frame part (15) being open at the bottom and being lowerable together with the rear window (8) to open the roof, and said frame part (15) encompassing at least the upper edge and the sides of the rear window (8), wherein on the one hand the rear window (8) can be opened with respect to the surrounding peripheral areas (9) of the roof (2) in their closed position so as to form a through-load facility between said peripheral areas (9) which is open at the bottom and can be enlarged downwardly, by opening the tailgate (11), as far as to a loading sill (21) located in the area of a trunk floor, and on the other hand, the rear window (8) can be fixedly connected to the surrounding peripheral areas (9) and can be lowered into the vehicle body along with them to open the roof.

9. The convertible vehicle (1) according to claim 8, **characterised in that** the loading sill (21) is located at the level of the upper edge of a rear bumper (20).

10. The convertible vehicle (1) according to any one of claims 8 or 9, **characterised in that**, when the tailgate (11) is closed, its upper edge directly adjoins the rear window (8), when the latter is closed, and can be folded down for opening.

11. A convertible vehicle roof comprising a rear window (8), which is incorporated in and movable relative to the roof (2), for a convertible vehicle (1) according to any one of claims 1 to 10.

12. The convertible vehicle roof according to claim 11, **characterised in that** the rear window can be opened, when the roof is closed, by a pivoting movement with respect to its laterally surrounding peripheral areas (9) and is securely held on said peripheral areas (9) and can be stowed in the vehicle body with the latter to open the roof.

## Revendications

1. Véhicule cabriolet (1) avec un toit (2) qui, dans sa position ouverte, peut être rangé dans la carrosserie, ce toit (2) comprenant une lunette arrière (8) que l'on peut ouvrir par rapport à des régions périphériques (9) du toit (2) lorsque ce dernier est fermé, lesdites régions périphériques (9) entourant ladite lunette arrière (8) et pouvant être abaissées dans la carrosserie lors de l'ouverture du toit,
**caractérisé en ce que** le toit (2) est constitué par une capote comprenant une enveloppe (7) qui est uniforme et continue hors la lunette arrière (8) et dans laquelle la lunette arrière (8) est tenue dans un élément de cadre (15) du toit (2), ledit élément de cadre (15) étant ouvert vers le bas et pouvant être abaissé ensemble avec la lunette arrière (8) pour ouvrir le toit, et ledit élément de cadre (15) entourant au moins le bord supérieur et les bords latéraux de la lunette arrière (8) qui peut être ouverte, lorsque le toit (2) est fermé, par un pivotement vers le haut par rapport aux régions périphériques (9) du toit (2) qui entourent ladite lunette arrière (8).

2. Véhicule cabriolet (1) selon la revendication 1, **caractérisé en ce que** la lunette arrière (8) est tenue dans un cadre pivotant (17) qui est déplaçable ensemble avec la lunette arrière (8).

3. Véhicule cabriolet (1) selon la revendication 2, **caractérisé en ce que**, le toit (2) et la lunette arrière (8) fermés, le bord supérieur d'un hayon (11) fermé peut s'engrener d'une manière étanche derrière l'extrémité inférieure du cadre pivotant (17).

4. Véhicule cabriolet (1) selon la revendication 3, **caractérisé en ce que** l'on peut ouvrir la lunette arrière (8) par pivotement par rapport au cadre pivotant (17) lorsque l'hayon (11) est fermé.

5. Véhicule cabriolet (1) selon l'une quelconque des revendications 1 à 4, **caractérisé en ce que** l'on peut ouvrir l'hayon (11) par pivotement vers le haut pour exposer une ouverture de chargement de bagages et **en ce que**, dans cette position, la lunette arrière (8) peut être tenue dans sa position ouverte au-dessous de l'hayon (11) et partiellement couverte par ce dernier.

6. Véhicule cabriolet (1) selon la revendication 5, **caractérisé en ce que** l'articulation de l'hayon (11) est située au-dessous d'une ligne de parapet de fenêtre (18) sur laquelle restent des fenêtres latérales et qui suit sensiblement la direction longitudinale du véhicule.

7. Véhicule cabriolet (1) selon l'une quelconque des revendications 1 à 6, **caractérisé en ce qu'**il s'agit d'un véhicule à hayon arrière dont l'hayon (11) comprend un panneau arrière sensiblement debout qui constitue l'extrémité arrière du compartiment de rangement du toit (2).

8. Véhicule cabriolet (1) avec un toit (2) qui, dans sa position ouverte, peut être rangé dans la carrosserie, ce toit (2) comprenant une lunette arrière (8) que l'on peut ouvrir par rapport à des régions périphériques (9) du toit (2) lorsque ce dernier est fermé, lesdites régions périphériques (9) entourant ladite lunette arrière (8) et pouvant être abaissées dans la carrosserie lors de l'ouverture du toit, et ledit véhicule (1) comprenant un hayon ouvrable (11), notamment selon l'une quelconque des revendications 1 à 7, **caractérisé en ce que** le toit (2) est constitué par une capote comprenant une enveloppe (7) qui est uniforme et continue hors la lunette arrière (8) et dans laquelle la lunette arrière (8) est tenue dans un élément de cadre (15) du toit (2), ledit élément de cadre (15) étant ouvert vers le bas et pouvant être abaissé ensemble avec la lunette arrière (8) pour ouvrir le toit, et ledit élément de cadre (15) entourant au moins le bord supérieur et les bords latéraux de la lunette arrière (8), la lunette arrière (8) pouvant être ouverte d'une côté, par rapport aux régions périphériques (9) fermées du toit (2) qui entourent la lunette arrière (8), de manière a constituer une région de passage entre lesdites régions périphériques (9), cette région étant ouverte vers le bas et pouvant être élargie vers le bas, par l'ouverture de l'hayon (11), jusqu'à un seuil de chargement (21) situé dans la région du fond du coffre, et la lunette arrière (8) pouvant être fixée, de l'autre côté, aux régions périphériques (9) qui l'entourent et pouvant être abaissée dans la carrosserie ensemble avec ces dernières pour ouvrir le toit.

9. Véhicule cabriolet (1) selon la revendication 8, **caractérisé en ce que** le seuil de chargement (21) est situé au niveau du bord supérieur d'un par-chocs arrière (20).

10. Véhicule cabriolet (1) selon l'une quelconque des revendications 8 ou 9, **caractérisé en ce que** l'hayon (11) fermé est contigu directement à la lunette arrière (8) par son bord supérieur et peut être basculé vers le bas pour son ouverture.

11. Toit de véhicule cabriolet comprenant une lunette arrière (8) intégrée dans le toit (2) et déplaçable par rapport à ce dernier, pour un véhicule cabriolet (1) selon l'une quelconque des revendications 1 à 10.

12. Toit de véhicule cabriolet selon la revendication 11, **caractérisé en ce que**, le toit fermé, la lunette arrière peut être ouverte par un pivotement par rapport aux régions périphériques (9) qui l'entourent latéralement et **en ce qu'**elle est tenue de manière fixe par lesdites régions périphériques (9) et peut être rangée dans la carrosserie ensemble avec ces dernières pour ouvrir le toit.
